# EUROPEAN PATENT APPLICATION

(11) **EP 2 116 946 A1**
(43) Date of publication of application: **11.11.2009**
(21) Application number: 08712142.2
(22) Date of filing: 29.02.2008
(51) Int. Cl.: G06F 17/50

(54) **KNIT GOODS SIMULATION DEVICE AND KNIT GOODS SIMULATION METHOD**

(30) Priority: 01.03.2007 JP 2007051071
(71) Applicant: Shima Seiki Manufacturing., Ltd., Wakayama-shi, Wakayama 641-0003 (JP)
(72) Inventor: YAMAMOTO, Shinji, Wakayama-shi Wakayama 641-0003 (JP)
(74) Representative: Emde, Eric
(86) International application number: PCT/JP2008/053620
(87) International publication number: WO 2008/105529

(57) **Abstract**

Design data for a knit product is converted into string line data in which a loop is expressed a string line. The loop is expressed by a polygonal column. A side face of the polygonal column is divided into polygons, and an apex coordinate of each polygon is stored in a polygon memory. A loop shown in a simulation image (40) displayed on a monitor (18) is extracted and processed by a graphic CPU (26) to thereby limit the processing range. Part of apex data is stored in a graphic memory (28), and its transfer from the polygon memory (24) is made unnecessary. A 3D simulation image (40) can be processed at high speed.

## Description

The present invention relates to simulation of a knit product.

The applicant has developed a technology for transforming design data of a knit product into a 3D simulation image (Patent Literature 1: Japanese Patent Publication Application No. 2005-242611). This image is called "3D loop simulation" because it expresses each loop of the knit product realistically. According to this technology, a 3D simulation image that is obtained from the design data can be used as a virtual sample for dealing knit products. However, it requires processing time to obtain a high-definition simulation image, and a user is kept waiting to reduce or expand the image and to perform viewpoint transformation and panning on the image.
Patent Literature 1: Japanese Patent Publication Application No. 2005-242611

An object of the present invention is to reduce the time required for simulating a knit product so that a display image can be transformed in substantially real time.

A knit product simulation device according to the present invention is a device for processing a 3D loop simulation image obtained from design data for a knit product, and generating a display image to be displayed on a color monitor, wherein the device is provided with discrimination means for, when changing the display image, discriminating a knit product loop that is included in the changed display image from a loop that is not included in the changed display image, and only the loop that is included in the changed display image is processed to thereby change the display image.

A knit product simulation method according to the present invention is a method for processing a 3D loop simulation image obtained from design data for a knit product, and generating a display image to be displayed on a color monitor, the method including: when changing the display image, discriminating a knit product loop that is included in the changed display image from a loop that is not included in the changed display image, and processing only the loop that is included in the changed display image, to thereby change the display image.

It is preferred that the simulation device be provided with representative point storage means for storing a representative point representing a loop position in the knit product, and that the discrimination means determine whether the loop is included in the changed display image or not, based on the presence or absence of the representative point in the display image.

It is more preferred that the simulation device be provided with string line data storage means for storing string line data in which each loop of the knit product is expressed by a string line within a 3D space, a general purpose CPU for generating, from the string line data, apex data relating to apexes of a polygon obtained by dividing a surface of each loop into a plurality of pieces, apex data storage means, a graphic CPU for generating the display image from the apex data, and a memory for the graphic CPU, wherein at least a part of the apex data is stored in the memory for the graphic CPU and supplied from the memory to the graphic CPU.
It is preferred that the part of the apex data of the entire knit product be extracted from the apex data substantially uniformly with respect to the entire knit product, and that the extracted apex data be stored in the memory for the graphic CPU.
It is preferred that the simulation device be provided with means for omitting partially the apexes of the polygon when reducing the size of the display image, to reduce the number of polygons.

In the present invention, when changing the display image, the loop included in the changed display image can be discriminated from the loop that is not, and only the loop included in the changed display image is processed. Therefore, the display image can be generated at high speed when reducing or expanding the image and performing viewpoint transformation and panning on the display image.
Here, when the representative point representing the loop position of the knit product is stored, it is possible to determine at high speed whether the loop is included in the changed display image based on the presence or absence of the representative point in the changed image.

Moreover, because the memory for the graphic CPU is provided, at least a part of the apex data can be stored in the memory for the graphic CPU and supplied from the memory to the graphic CPU, whereby data transferred from the apex data storage means to the graphic CPU can be reduced and the display image can be changed at higher speed.
Here, when the part of the apex data of the entire knit product is extracted from the apex data substantially uniformly with respect to the entire knit product, and the extracted apex data is stored in the memory for the graphic CPU, the display image of any part of the knit product can be processed evenly at high speed. Extracting substantially uniformly here means extracting the apex data from each of all sections of the knit product completely. In a garment, for example, because the design of the front face side is often more important than the design of the back face side, 40% of the apex data on the front face side may be stored in the memory for the graphic CPU, and 25% of the apex data on the back face side may be stored in the memory for the graphic CPU, and the apex data may be extracted substantially uniformly in the sense of the invention.
Furthermore, when some of the apexes of the polygon are omitted to reduce the number of polygons when reducing the display image, the display image can be generated at higher speed. Specifically, a plurality of polygons exist in one loop, and because each polygon has apexes, reducing the number of apexes reduces the number of polygons, whereby the display image is simplified. As a result, the display image can be generated at higher speed.

In the present invention, the processing range for changing the display image is limited and a part of the apex data is stored in the memory for the graphic CPU so that each processing can be performed at high speed and that the display image can be changed overall in substantially real time. As a result, the design work or design evaluation using the 3D loop simulation image on the color monitor can be carried out at a pace with which the user is satisfied. Note that in this specification the description of the simulation device apply directly to the simulation method.

Fig. 1 is a block diagram of a simulation device of an embodiment;
Fig. 2 is a diagram showing segments configuring each loop in the embodiment, (A) showing an arrangement of the loops, and (B) the segments obtained by decomposing the loops;
Fig. 3 is a diagram showing data on a stitch and processing performed on the data, according to the embodiment;
Fig. 4 is a diagram schematically showing clipping performed on an enlarged display of a garment according to the embodiment; and
Fig. 5 is a diagram in which the segments are simplified when reducing the size of the garment.

- 2: Simulation device
- 4: General purpose bus
- 6: Image bus
- 8: Knit design part
- 10: Data transformation part
- 12: String line data generation part
- 14: General purpose memory
- 16: User input
- 18: Color monitor
- 19: Video memory
- 20: Color printer
- 22: General purpose CPU
- 24: Polygon memory
- 26: Graphic CPU
- 28: Graphic memory
- 31: Center
- 32 to 35: Peripheral stitches
- 36: Stitch data
- 38: Apex data
- 40: Simulation image
- 41: Area
- 42,43: Segment
- P1 to P12: Apexes

The best mode for carrying out the present invention is described hereinafter, but the present invention is not limited to this mode.

### Embodiment

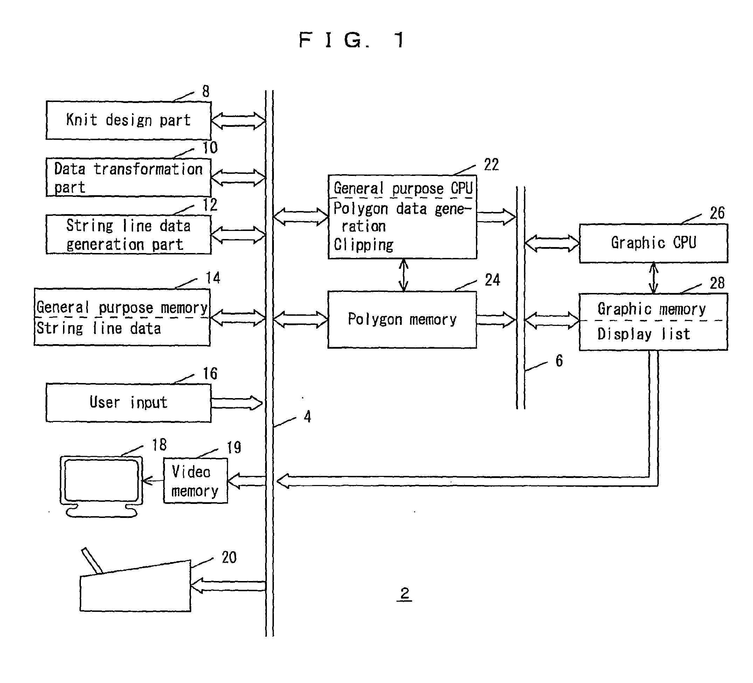

Figs. 1 to 5 show a simulation device and simulation method of an embodiment. In the diagrams, reference numeral 2 represents the simulation device, which is realized by an appropriate computer, 4 a general purpose bus, and 6 an image bus, which is am image data dedicated bus. Reference numeral 8 represents a knit design part which is used for designing a knit product, and a data transformation part 10 transforms design data obtained by the knit design part 8 to knitting data used by a knitting machine, such as a weft knitting machine. A string line data generation part 12 transforms the knitting data to string line data. The string line data expresses the shape of a loop or a connection relation between the loops in the knit product, as well as the position of the loop within the 3D space, in the form of string lines. When using a plurality of strings in one knit product, which string is used in a certain loop is also expressed by the string line data. By transforming the string expressed by the string line data into the one in which polygonal column-shaped segments are connected, 3D data before rendering the knit product can be obtained. A general purpose memory 14 stores the data generated by the components of the knit design part 8 to the string line data generation part 12.

Reference numeral 16 represents input means such as a stylus, mouse and trackball for user input, and reference numeral 18 a color monitor for displaying the design data, string line data, and 3D loop simulation data. Reference numeral 19 is a video memory that is directly connected to the color monitor 18. Reference numeral 20 is a color printer for color-printing the design data, string line data and 3D loop simulation image. A general purpose CPU 22 transforms the string line data into the apex data of the polygons, extracts the loops within the processing range in accordance with viewpoint transformation, reduction, expansion, rotation, panning or the like, and clips out the rest from the processing range to eliminate it. The obtained polygon data is stored in a polygon memory 24. The polygon data is configured by, for example, an apex coordinate (3D coordinate) of each polygon, opacity, and a color value of the apex, and is called "apex data" hereinafter.

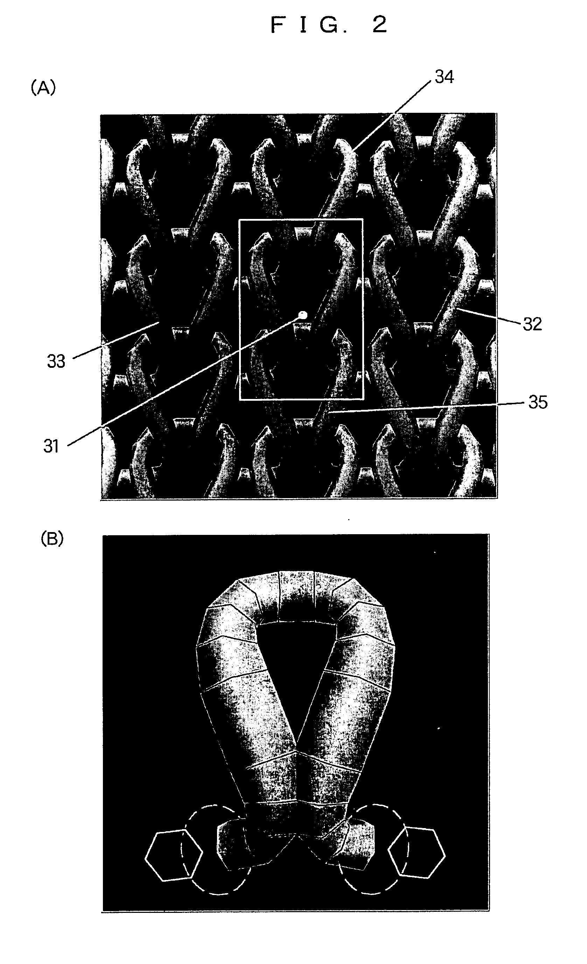

Fig. 2 shows (A) an arrangement of the loops and (B) the segments obtained by dividing the loops according to the embodiment. The string line data includes the 3D coordinate of a center 31 of each loop, and the number of each peripheral loop having the connection relation with each loop. Note that hereinafter the word "loop" is a synonym of "stitch" and the center is the point representative of the loop, but the loop may be represented by a point other than the center. For example, in the case of Fig. 2(A), loops 32, 33 that are connected horizontally and loops 34, 35 that are connected vertically exist around the loops surrounded by a small rectangular. When one loop and another loop are overlapped in the same position, it is considered that these loops are connected to each other. Further, when a miss yarn is overlapped with one loop, it is considered that these are connected to each other either. The stitches around one stitch can be specified based on the connection relations described above.

As shown in Fig. 2(B), one loop is divided into a plurality of segments, each of which is sectioned by a solid line. As shown in the right and left segments marked by broken lines in Fig. 2(B), each segment is formed into a polygonal column, and a cross section of the loop forms polygonal column-shaped bottom surface and top surface. Because the cross sectional shape of the yarn constituting the loop is almost circular, the segment is preferably formed into a hexagonal prism or octagonal prism, but here the segment is formed into a hexagonal prism in order to improve the processing speed. However, when reducing the image and thereby the significance of each loop is lowered, the segment is simplified into a square prism or triangular prism in order to improve the processing speed. Each side face of the segment has a rectangular shape and divided into two triangles. When the segment is formed into a hexagonal prism, 2 x 6 = 12 polygons are generated per segment. Approximately ten to twenty segments are provided per loop. Therefore, the number of polygons per loop is approximately 100. In the step of handling the apex data, the coordinate (3D coordinate) of each apex of each polygon, opacity, and the color value of the apex are specified, and the color value may be provided separately from the apex data.

A graphic CPU 26 generates image data of each position on the polygon by interpolating the apex data of the polygon. This data includes the 3D coordinate, opacity, color value, and the like. Once the image data of each polygon is generated, the graphic CPU 26 overlaps the images of a plurality of polygons in a depth direction on the basis of the position in relation to a visual point, and performs shading or the like by means of a light source to generate a 3D loop simulation image to be displayed on the color monitor 18.

The 3D loop simulation image that is generated as described above expresses a virtual knit product. The virtual knit product configured by the 3D loop simulation image is put on a human body model, and the posture of the human body model wearing the virtual knit product is changed, or the virtual knit product is hung on a hanger or placed flat, so that the design of the knit product can be evaluated. Thus obtained virtual sample is called "virtual sample," which is displayed on the color monitor or printed out by the color printer. Here, when changing the viewpoint onto the 3D loop simulation image, reducing/expanding the display image, rotating the 3D loop simulation image, or panning the display image, the image needs to be reprocessed. For example, when, for example, reducing/expanding the display image and changing a display area by transforming the viewpoint, the image displayed on the color monitor 18 is changed. If the image cannot be changed at high speed in accordance with the viewpoint transformation or the like, the user is kept waiting. Note that reduction/expansion/rotation of the display image is merely a part of the viewpoint transformation, and panning is an example of continuous viewpoint transformation. Regenerating the display image without changing the apex data of the polygon is necessary when not only performing the viewpoint transformation but also changing the light source or the color value of the yam.

The graphic CPU 26 requires the apex data of the polygon in order to generate the 3D loop simulation image. The apex data is supplied from the polygon memory 24 to the graphic CPU 26 via the image bus 6. However, the transfer speed of the bus 6 is limited, and supplying the apex data from a graphic memory 28 connected directly to the graphic CPU 26 is faster. Therefore, at least a part of the apex data is stored in a display list of the graphic memory 28. The minimum storage unit of the display list is loop. Note that, in addition to the display list, the graphic memory 28 stores a 2D display image and the like to be displayed on the color monitor 18.

Because the graphic memory 28 generally does not have enough capacity to store the whole apex data, a part of the knit product, i.e., the apex data of 1/2 to 1/4 of the entire loops is registered in the display list. It is preferred that the loop to be registered in the display list be dispersed to the entire knit product. As a result, when processing any part of the knit product, it can be processed at averagely high speed. In other words, when the apex data of a specific section of the knit product is registered intensively in the display list, the processing speed becomes extremely low when displaying a section that is not registered in the display list. On the other hand, when the loop to be registered in the display list is dispersed to the entire knit product, any sections of the knit product can be processed at substantially the same speed.

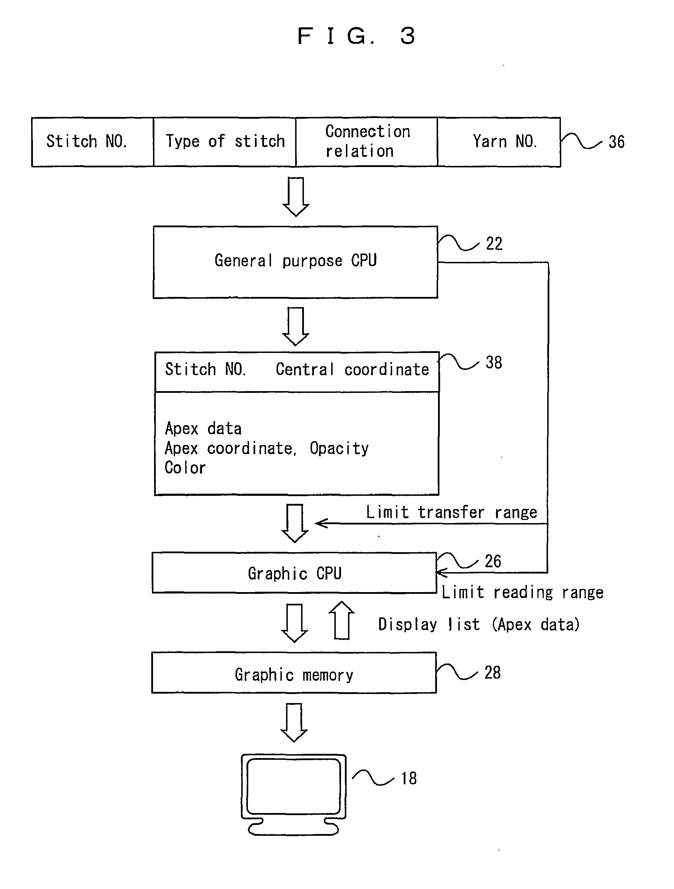

Fig. 3 shows the process performed on stitch data 36 contained in the string line data and the process of displaying on the color monitor 18. A stitch type of each stitch (face stitch/back stitch, knit/tuck/miss, the presence of racking and its pitch, etc.) and the connection relation between a stitch and peripheral stitches are described in the stitch data 36. The connection relation indicates an overlap between stitches that are literally connected vertically or horizontally, an overlap between double stitches, and an overlap between a miss stitch and a normal stitch. Further, a yarn to be used is indicated by a yarn number. Note that a stitch number is expressed in the form of an address or the like within a table storing the stitch data 36. The general purpose CPU 22 transforms the stitch data into the apex data, and the apex data includes, for example, the apex coordinate of a polygon, the opacity and color value thereof. The apex data is transferred to the graphic CPU 26, and the general purpose CPU 22 uses the central coordinate of a loop and the connection relation that are contained in the stitch data 36, to determine whether the loop is contained in a display range of the color monitor 18. For example, when the viewpoint conversion such as rotation, reduction/expansion or panning is performed, the display range changes.

A loop, the central coordinate of which is contained in the display range in relation to a new viewpoint, is contained in the display range. A loop that is in the connection relation with the loop contained in the display range is also included in the display range and taken as a target of processing. In order to completely check the loops within the display range, it is only necessary to expand a range within which checking is performed on the loop whose central coordinate is included in the display range, and to configure a processing range with, for example, the loops having the abovementioned connection relation and a loop that is one step outside the loops and is in the connection relation therewith. In this manner, loops within a new display range are prevented from being removed from the target of processing, while limiting the processing range. Limiting the processing range in accordance with the new display range is called "clipping." The range of transfer from the polygon memory 24 to the graphic CPU 26 is limited by clipping.

At least a part of the apex data is stored in the display list of the graphic memory 28. The general purpose CPU 22 notifies the graphic CPU 26 of the range of loops that need to be processed, and the graphic CPU 26 reads the apex data that is registered in the display list, from the graphic memory 28. The graphic CPU forms a 3D image of the polygon by using the apex data, performs processing such as overlapping the polygons in the depth direction in relation to the viewpoint and shading, and generates an image to be displayed on the color monitor 18.

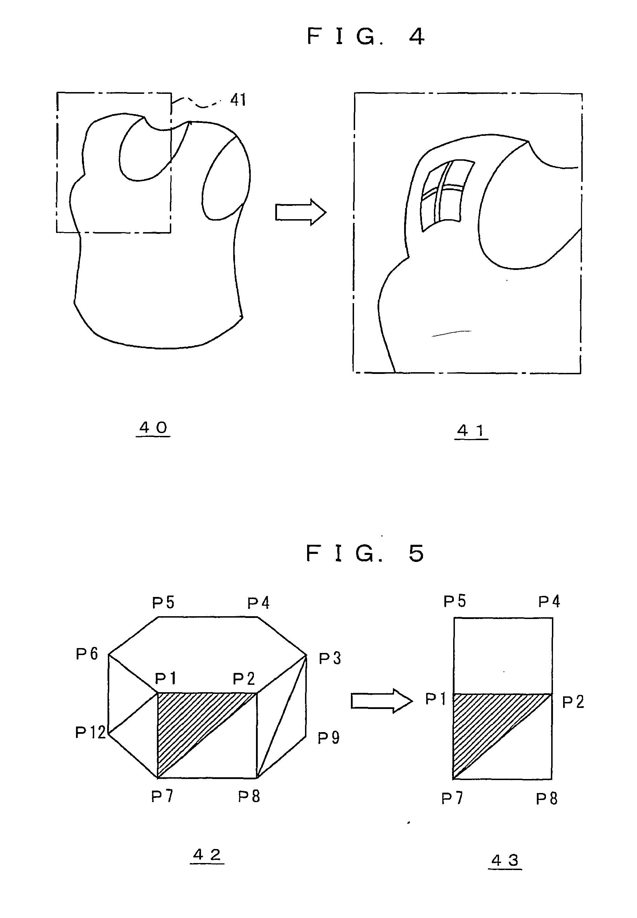

Fig. 4 shows an example of clipping, wherein, for example, it is assumed that the display is enlarged with respect to a 3D loop simulation image 40 and only an area 41 is contained in the new display range. At this moment, the general purpose CPU determines whether this display range has loops or not, based on the central coordinate of a loop and a loop that is in the connection relation with the loops contained in the display range. As a result, the number of polygons to be processed is reduced to a fraction of the total number of polygons, for example, whereby the processing can be carried out several times faster. Out of the apex data included in the target of processing, the one that is already registered in the display list does not need to be transferred, and therefore the processing speed improves several times. Therefore, for example, when it is assumed that the number of polygons included in the new display range is reduced to a fraction of the total number of polygons and 1/2 of the loops to be processed is registered in the display list, the processing speed improves approximately ten times. Note that when the 3D loop simulation image itself is sterically deformed by putting the 3D loop simulation image on the human body model, new apex data is obtained with respect to the total number of polygons, and the processing performed by the graphic CPU is omitted for the loops that are removed from the range of display on the color monitor.

Fig. 5 shows an example in which a hexagonal prism-shaped segment 42 is converted into a square prism-shaped segment 43 to simplify the segments. When the display is reduced, a visual impact is small even when a simpler segment such as the segment 43 is used. Therefore, apexes P1, P2, P4, P5, P7, P8 and the like of the original segment 42 are directly taken as the apexes of the new segment 43, and apexes P3, P6, P9 and P12 are deleted. The number of polygons is 8 in the segment 43, and the apexes of each polygon were the apexes present in the segment 42. By simplifying the data of each polygon in this manner, the number of polygons is reduced to, for example, approximately 2/3 to 1/2 and the processing speed is increased approximately 1.5 times to twice.

The following effects are achieved in this embodiment.
(1) The processing speed can be increased by limiting the processing range by performing clipping.
(2) The loops to be processed can be easily discriminated from the loops that are not processed, by using the central coordinate of each loop and the connection relation between the loops.
(3) The processing speed can be increased several times by registering a part of apex data into the display list.
(4) Any section of the knit product can be processed at averagely high speed by dispersing the loops to be registered in the display list, over the entire knit product.
(5) The processing speed can be increased approximately 1.5 times, for example, by simplifying the segments using only the remaining apexes obtained by deleting some of the apexes of the segments, when reducing the display.
(6) The waiting time that is required when performing the processing, such as rotating, viewpoint-transforming, reducing, expanding or panning of the knit product, can be reduced, and the 3D loop simulation image obtained after the processing can be displayed in real time.

## Claims

1. A knit product simulation device (2) for processing a 3D loop simulation image (40) obtained from design data for a knit product, and generating a display image to be displayed on a color monitor (18), **characterized in that**
the device (2) is provided with discrimination means for, when changing the display image, discriminating a knit product loop that is included in the changed display image from a loop that is not included in the changed display image , and only the loop that is included in the changed display image is processed to thereby change the display image.

2. The knit product simulation device (2) according to claim 1, **characterized in that** the simulation device (2) is further provided with representative point storage means for storing a representative point representing a loop position in the knit product, and the discrimination means determines whether the loop is included in the changed display image or not, based on the presence or absence of the representative point in the display image.

3. The knit product simulation device (2) according to claim 1, further comprising:
string line data storage means for storing string line data in which each loop of the knit product is expressed by a string line within a 3D space;
a general purpose CPU (22) for generating, from the string line data, apex data relating to apexes of a polygon obtained by dividing a surface of each loop into a plurality of pieces;
apex data storage means;
a graphic CPU (26) for generating the display image from the apex data; and
a memory (28) for the graphic CPU (26),
the knit product simulation device (2) being **characterized in that**
at least a part of the apex data is stored in the memory (28) for the graphic CPU (26) and supplied from the memory to the graphic CPU (26).

4. The knit product simulation device (2) according to claim 3, **characterized in that** from the apex data, the part of the apex data of the entire knit product is extracted substantially uniformly with respect to the entire knit product, and the extracted apex data is stored in the memory (28) for the graphic CPU (26).

5. The knit product simulation device (2) according to claim 3, further comprising means for omitting partially the apexes of the polygon when reducing the size of the display image, to reduce the number of polygons.

6. A knit product simulation method for processing a 3D loop simulation image (40) obtained from design data for a knit product, and generating a display image to be displayed on a color monitor (18),
the method being **characterized in** comprising: when changing the display image, discriminating a knit product loop that is included in the changed display image from a loop that is not included in the changed display image, and processing only the loop that is included in the changed display image, to thereby change the display image.
